# EUROPÄISCHE PATENTSCHRIFT

(11) **EP 2 260 007 B1**
(45) Veröffentlichungstag und Bekanntmachung des Hinweises auf die Patenterteilung: **19.12.2012**
(21) Anmeldenummer: 09727937.6
(22) Anmeldetag: 03.04.2009
(51) Int. Cl.: C02F 3/28, B01D 21/02, B01D 21/24

(54) **REAKTOR MIT DREIPHASENTRENNVORRICHTUNG**
REACTOR WITH THREE-PHASE SEPARATION DEVICE
RÉACTEUR AVEC DISPOSITIF DE SÉPARATION À TROIS PHASES

(30) Priorität: 03.04.2008 DE 102008017020
(43) Veröffentlichungstag der Anmeldung: 15.12.2010
(73) Patentinhaber: Bremer pro aqua Wasser- und Abwassertechnik GmbH, 28359 Bremen (DE)
(72) Erfinder: Eggert, Wolfgang, 45289 Essen (DE); Risse, Henry, 52080 Aachen (DE); Weinhold, Gerd, 04668 Grimma (DE)
(74) Vertreter: Strehlke, Ingo Kurt
(86) Internationale Anmeldenummer: PCT/EP2009/002452
(87) Internationale Veröffentlichungsnummer: WO 2009/121610

(56) Entgegenhaltungen:
- EP-A1- 1 408 008
- US-A- 4 165 285
- US-B1- 6 478 963

## Beschreibung

Die Erfindung betrifft einen Reaktor zur anaeroben Behandlung von Flüssigkeiten, insbesondere Abwasser oder wässrigen Lösungen, durch anaerobe biologische Umsetzung organischer Bestandteile und/oder Verunreinigungen mittels granulierter und/oder flockiger und/oder auf fluidisierbaren Trägermaterialien fixierter Biomasse, wobei der Reaktor eine Dreiphasentrennvorrichtung zur Separierung von Gas, Flüssigkeit und Feststoff eines Dreiphasengemisches aufweist.

In derartigen Reaktoren zur anaeroben Behandlung von Flüssigkeiten werden die organischen Verbindungen des Abwassers überwiegend zu CO₂, H₂O und Biogas abgebaut. Dieser Vorgang läuft in einem Dreiphasensystem ab, bestehend aus der Flüssigkeit, welche das zu behandelnde Abwasser darstellt, dem Feststoff der im Schlammbett vorliegenden granulierten Biomasse, sowie der Gasphase, die vorwiegend aus Methan, CO₂ und Spurengasen besteht.

Die anaerobe Reinigung organisch belasteter Abwässer wird vorteilhaft in Schlammbettreaktoren betrieben, die nach dem bekannten UASB-Prinzip arbeiten. Reaktoren, die nach diesem Prinzip arbeiten, sind z.B. aus der EP 0 808 805 A1, US4165285 oder der EP 1 408 008 B1 bekannt.

Die Biomasse eines UASB-Reaktors liegt idealerweise in Form eines Gemisches vor, das sich aus kugelförmigen Agglomeraten und Feinschlamm zusammensetzt, wobei die Biomasse-Agglomerate Durchmesser von 1-5 mm und eine höhere Dichte als Wasser aufweisen, wodurch sich ein Schlammbett ausbildet. Es ist jedoch auch möglich, die Biomasse auf leicht fluidisierbaren Trägermaterialien zu fixieren. Durch die im Schlammbett erfolgende Biogaserzeugung kommt es zu einer Blasenbildung. Einer vorgegebenen volumenspezifischen CSB-Fracht (chemischer Sauerstoffbedarf) entspricht ein potentieller volumenspezifischer Biogasertrag. Die Gasmenge summiert sich jedoch über die Reaktorhöhe auf und kann Blasenaufstiegsgeschwindigkeiten und Aufstiegsdichten hervorrufen, die eine Fluidisierung der Biomasse bewirken können. Dafür kann in Abhängigkeit von der Raumbelastung eine kritische Höhe ermittelt werden.

Ein Teil der aufsteigenden Blasen heftet sich an die Biomassepartikel und transportiert diese aus dem Schlammbett heraus. In Abhängigkeit von der Raumbelastung, der Partikelgröße und der hydraulischen Belastung für die Verwirbelung der Biomasse, kann ein kritischer Punkt ermittelt werden.

Das UASB-Verfahren ist ein kontinuierliches Verfahren, bei dem der Reaktor ständig von Abwasser durchflossen wird. Die Abwasserzuführung erfolgt im unteren Bereich des Reaktors, im Bereich des Schlammbettes. Der vertikal ausgerichtete Reaktorraum kann somit aufgeteilt werden in ein Schlammbett im unteren Bereich, welches die anaerobe Reaktionszone bildet, sowie einen oberen Bereich, wobei der obere Bereich des Reaktors eine Dreiphasentrennvorrichtung zur Separierung von Gas-, Flüssigkeit und Feststoff eines Dreiphasengemisches aufweist.

UASB-Reaktoren enthalten Dreiphasentrennsysteme mit denen die drei Phasen Biogas, Abwasser und Schlamm voneinander getrennt werden. Diese Dreiphasentrennsysteme sind über dem Schlammbett angeordnet und enthalten z.B. Hauben zum Auffangen und Fortleiten des Biogases, sowie an der Wasseroberfläche Ablaufrinnen für die Fortleitung des gereinigten Abwassers.

Weiter gestatten diese Konstruktionen nach Gasabtrennung die Sedimentation der Biomasse.

Nachteilig bei den bekannten UASB-Reaktoren und den bekannten Dreiphasentrennsystemen ist deren großvolumige Ausgestaltung bei geringen Umsatzraten. Weiterhin nachteilig bei den bekannten Dreiphasentrennsystemen ist es, dass teilweise Sedimente in die Ablaufleitung gelangen können, d.h. dass teilweise die Dreiphasentrennung nicht vollständig gewährleistet ist.

Aufgabe der Erfindung ist es, einen Reaktor zur anaeroben Behandlung von Flüssigkeiten derart weiter zu bilden, dass sehr hohe volumenspezifische Umsatzraten gewährleistet werden und damit eine effizientere Ausnutzung des Reaktorvolumens erzielt werden kann.

Diese Aufgabe wird erfindungsgemäß durch einen Reaktor gemäß Anspruch 1 gelöst. Vorteilhafte Weiterbildungen der Erfindung sind in den Unteransprüchen angegeben.

Erfindungsgemäß ist der Reaktor zur anaeroben Behandlung von Flüssigkeiten, insbesondere Abwasser oder wässrigen Lösungen, durch anaerobe biologische Umsetzung organischer Bestandteile und / oder Verunreinigungen des Abwassers mittels granulierter und / oder flockiger und / oder auf fluidisierbaren Trägermaterialien fixierter Biomasse, wobei der Reaktor eine Dreiphasentrennvorrichtung zur Separierung von Gas, Flüssigkeit und Feststoff eines Dreiphasengemisches aufweist, dadurch gekennzeichnet, dass die Dreiphasentrennvorrichtung zumindest eine Einlaufkulisse aufweist, die horizontal durchströmbar ist, zumindest eine Ablaufvorrichtung aufweist, über die die Flüssigkeit aus dem Dreiphasengemisch ableitbar ist, und zumindest eine Umlenkvorrichtung aufweist, die in dem Strömungsweg zwischen der Einlaufkulisse und der Ablaufvorrichtung zumindest eine Strömungsumlenkung erzwingt.

In einem derartigen Reaktor erfolgt die anaerobe Reinigung von Abwasser durch eine Vergärung von organischen Verunreinigungen mittels der Biomasse. Die Biomasse bildet im nicht fluidisierten Zustand ein Schlammbett aus im unteren Bereich des Reaktors zur anaeroben Behandlung von Flüssigkeiten. Im Bereich des Schlammbettes, d.h. unterem Bereich des Reaktors befindet sich eine Zuführleitung sowie ein Abwasserverteilungssystem über die dem Reaktor das zu reinigende Abwasser zugeleitet wird. Innerhalb des Schlammbettes erfolgt eine Umsetzung der organischen Bestandteile in Biogas.

Über dem Schlammbett wird mit einem Dreiphasentrennsystem einerseits Biomasse im Reaktor zurückgehalten und in das Schlammbett zurückgeführt, da die abgetrennte Biomasse aufgrund der höheren Dichte als Wasser selbstständig absinkt. Weiter wird das bei der Vergärung gebildete Biogas separiert und aus dem Reaktor über ein oberhalb des Flüssigkeitsspiegels befindlichen Gassammelraum aufgeführt. Des Weiteren wird aus der Dreiphasentrennvorrichtung über eine Ablaufvorrichtung das gereinigte Wasser abgeleitet.

Die erfindungsgemäße Dreiphasentrennvorrichtung weist eine Einlaufkulisse auf, die eine Umlenkung des vertikal aufsteigenden Dreiphasengemisches in eine horizontale Strömungsrichtung bewirkt. Durch diese Umlenkung wird bereits eine Phasentrennung provoziert, die des Weiteren auch durch die hervorgerufene Strömungsbeschleunigung unterstützt wird, da die Einlaufkulisse eine Verengung des Fließquerschnittes bewirkt.

Die Dreiphasentrennvorrichtung ist im oberen Bereich des Reaktors zur anaeroben Behandlung von Flüssigkeiten angeordnet, so dass sich oberhalb des Flüssigkeitsspiegels eine Gassammelraum ausbildet indem sich das gebildete Biogas, welches mittels der Dreiphasentrennvorrichtung aus dem Dreipasengemisch separiert wurde, sammelt und aus diesem Gassammelraum zur weiteren Verwendung ableitbar ist.

Des Weiteren weist die Dreiphasentrennvorrichtung eine Ablaufvorrichtung auf, über die das aufbereitete Wasser, welches aus dem Dreiphasengemisch separiert wurde, ableitbar ist. Um zu vermeiden, dass es zu einer Kurzschlussströmung von der Einlaufkulisse zur Ablaufvorrichtung kommt, ist zumindest eine Umlenkvorrichtung in dem Strömungsweg zwischen der Einlaufkulisse und der Ablaufvorrichtung angeordnet, die derart ausgestaltet ist, dass zumindest eine Strömungsumlenkung der Strömung des Dreiphasengemisches im Bereich zwischen der Einlaufkulisse und der Ablaufvorrichtung der Dreiphasentrennvorrichtung erzwungen wird.

Durch diese Umlenkvorrichtung wird somit einerseits eine Kurzschlussströmung von der Einlaufkulisse zur Ablaufvorrichtung vermieden, d.h. dass es wirksam unterbunden wird, dass das Dreiphasengemisch in die Ablaufvorrichtung gelangen könnte, ohne dass das Gas und der Feststoff von der Flüssigkeit separiert ist. Die erzwungene Strömungsumlenkung bewirkt eine zusätzliche Separierung des Dreiphasengemisches in Gas, Flüssigkeit und Feststoff.

Die Umlenkvorrichtung ist durch zumindest ein über die Wasseroberfläche bzw. den Wasserspiegel des Reaktors reichendes insbesondere senkrecht angeordnetes Tauchblech oder eine entsprechend angeordnete Tauchwand gebildet. Durch derartige Tauchwände oder Tauchbleche wird die in die Dreiphasentrennvorrichtung eintretende Dreiphasenmischung gezwungen, unterhalb der Tauchwand hindurchzuströmen, da die Tauchbleche bzw. Tauchwände bis oberhalb des Flüssigkeitsspiegels innerhalb des Reaktors reichen.

Das Dreiphasengemisch, welches innerhalb der Dreiphasentrennvorrichtung in Gas, Flüssigkeit und Feststoff aufzuteilen ist, tritt somit durch die Einlaufkulisse horizontal in die Dreiphasentrennvorrichtung ein. Hieran schließt sich eine Beruhigungszone an. Insbesondere kann diese Beruhigungszone derart ausgestaltet sein, dass diese sich prismenartig erweitert.

In einer bevorzugten Ausführungsform weist die Dreiphasentrennvorrichtung einen sich nach unten verjüngenden, insbesondere trichterförmigen Sedimentsammelbehälter auf.

Die Dreiphasentrennvorrichtung weist auch eine nach unten gerichtete Sedimentableitung auf, die an Ihrer Unterseite einen Gasabweiser hat.

Der Sedimentsammelbehälter kann derart ausgestaltet sein, dass sich eine Sedimentableitung im unteren Bereich an diesem Sedimentsammelbehälter der Dreiphasentrennvorrichtung anschließt.

Durch die Ausgestaltung des Sedimentsammelbehälters als sich nach unten verjüngenden, insbesondere trichterförmigen, Sammelbehälter mit einem sich daran nach unten anschließenden Rohr oder Hohlprofil, welches eine Sedimentableitung ausbildet, kann der in der Dreiphasentrennvorrichtung separierte Feststoffanteil in vertikaler Richtung nach unten dem Schlammbett des Reaktors wieder zugeführt werden. Um zu vermeiden, dass von unten her Gasbestandteile in die Sedimentableitung oder den Sedimentsammelbehälter der Dreiphasentrennvorrichtung eintritt, weist die Sedimentableitung vorzugsweise an Ihrer Unterseite Gasabweiser auf, die durch geneigte, d.h. unter einem Winkel zur Vertikalen angeordnete Bleche, insbesondere in Form eines Winkels als V-förmige Anordnung besteht. Hierdurch werden aufsteigende Gasbestandteile an dem Rohr oder Profil, welches die Sedimentsableitung an der Unterseite der Dreiphasentrennvorrichtung bildet, vorbei geleitet.

Die Dreiphasentrennvorrichtung kann durch miteinander verbundene, insbesondere verschweißte flache Bleche oder Platten gebildet sein und einen symmetrischen Aufbau aufweisen, d.h. insbesondere einen spiegelsymmetrischen Aufbau. Bei einem spiegelsymmetrischen Aufbau sind somit zwei gegenüber angeordnete Einlaufkulissen angeordnet, an die sich in Strömungsrichtung in Richtung der Ablaufrichtung jeweils ein Tauchblech als Umlenkvorrichtung anschließt. In der Mitte der spiegelsymmetrisch ausgebildeten Dreiphasentrennvorrichtung ist die Ablaufvorrichtung angeordnet. In einer derartigen Ausgestaltung weist die Dreiphasentrennvorrichtung somit einen trichterförmigen oder V-förmigen Aufbau auf, der auf gegenüberliegenden Seiten durch die Ablaufkulissen angeströmt wird. Der Trichter an der Unterseite oder die V-förmige Anordnung von Blechen bilden einen Sedimentsammelbehälter, an dessen Unterseite sich eine Sedimentableitung zur Rückleitung der abgetrennten Feststoffe in das Schlammbett anschließt.

Durch die Verwendung flacher Bleche oder Platten ohne komplizierte Bauformen ist somit eine unkomplizierte Konstruktion der Dreiphasentrennvorrichtung und des gesamten Reaktors zur anaeroben Behandlung von Flüssigkeiten möglich.

Die Einlaufkulisse oder die Einlaufkulissen der Dreiphasentrennvorrichtung ist durch geschlitzte oder gelochte Platten gebildet. Durch diese Ausgestaltung der Einlaufkulissen wird gleichzeitig eine Strömungsbeschleunigung durch die erzeugte Verengung des Strömungsquerschnittes bewirkt, welche wiederum die Trennung der Phasen voneinander unterstützt und beschleunigt.

In der Dreiphasentrennvorrichtung ist zwischen Einlaufkulisse und Ablaufvorrichtung mindestens eine Tauchwand angeordnet. Hierdurch wird eine Kurzschlussströmung von der Einlaufkulisse direkt zur Ablaufvorrichtung verhindert.

Vorzugsweise ist die Ablaufvorrichtung mittig in der Dreiphasentrennvorrichtung angeordnet. Besonders vorteilhaft ist dies bei einem insgesamt spiegelsymmetrischen Aufbau der Dreiphasentrennvorrichtung, d.h. dass die Ablaufvorrichtung als mittig angeordnete Sammeleinrichtung für das abgetrennte aufbereitete Wasser beidseitig angeströmt werden kann.

Vorzugsweise ist / sind unterhalb der Dreiphasentrennvorrichtung innerhalb des Reaktors zur anaeroben Behandlung von Flüssigkeiten ein oder mehrere Gasabscheider angeordnet, insbesondere können ein oder mehrere Gasabscheider im Bereich vom 20 % bis 65 % der Reaktorbauhöhe angeordnet sein. Bei dieser Ausführungsform befindet sich somit in der unteren Hälfte des Reaktors zumindest eine Ebene mit Gasabscheideemlementen, die das Auffangen des gebildeten Biogases ermöglichen und es über eine Verbindungsleitung aus dem Reaktor heraus abführen können. Durch eine Anordnung im Bereich von 20 % bis 65 % der Reaktorbauhöhe ist es möglich, im unteren Teil des Reaktors Biogas aufzufangen um damit den oberen Teil des Reaktors von Turbulenzkräften zu entlasten.

Es können eine oder mehrere Gasabscheider, insbesondere eine oder mehrere Gasabscheiderebenen in verschiedenen Bauhöhen des Reaktors angeordnet sein.

Der oder die Gasabscheider können ein nach unten offenes Profil zur Gasabscheidung aufweisen, insbesondere ein nach unten offenes Profil mit gewellten oder profilierten Kanten. Durch eine derartige Ausgestaltung der Gasabscheider wird die Abscheidung des gebildeten Biogases aus dem Dreiphasengemisch verbessert.

In einer bevorzugten Ausführungsform ist zumindest ein mit einem unterhalb der Dreiphasentrennvorrichtung angeordneten Gasabscheider in Verbindung stehendes Gasaufstiegsrohr zu dem Reaktor parallel geschaltet, wobei der Reaktor und das Gasaufstiegsrohr kommunizierende Röhren bilden können.

Die unterhalb der Dreiphasentrennvorrichtung angeordneten Gasabscheider, insbesondere in mehreren Ebenen angeordneten Gasabscheiderelemente, die das Auffangen des gebildeten Biogases ermöglichen, sind über eine Verbindungsleitung mit einem Gasaufstiegsrohr verbunden. Innerhalb dieser Verbindungsleitung zwischen den Gasabscheidern und dem Gasaufstiegsrohr bildet sich ein dauerhaftes Gaspolster aus, welches es zuverlässig verhindert, dass Sedimentbestandteile in das Aufstiegsrohr eintreten können.

Vorzugsweise erfolgt die Verbindung zwischen den Gasabscheidern oder Gasabscheiderelementen über eine Verbindungsleitung, in der sich beim Betrieb des Reaktors bestimmungsgemäß ein Gaspolster ausbildet.

In einer bevorzugten Ausführungsform ist im unteren Teil des Reaktors eine absperrbare Entleerungsleitung angeordnet ist, insbesondere zur Verbindung des Reaktors mit einem Gasaufstiegsrohr. Zur Absperrung und Öffnung der Entleerungsleitung ist vorzugsweise eine betätigbare Absperrarmatur in der Leitung angeordnet.

Ein Ausführungsbeispiel der Erfindung ist in den Figuren dargestellt und wird im Folgenden näher erläutert. Es zeigen:
- Figur 1: einen Längsschnitt durch einen erfindungsgemäßen Reaktor;
- Figur 2: eine perspektivische Ansicht der Dreiphasentrennvorrichtung des Reaktors nach Figur 1.

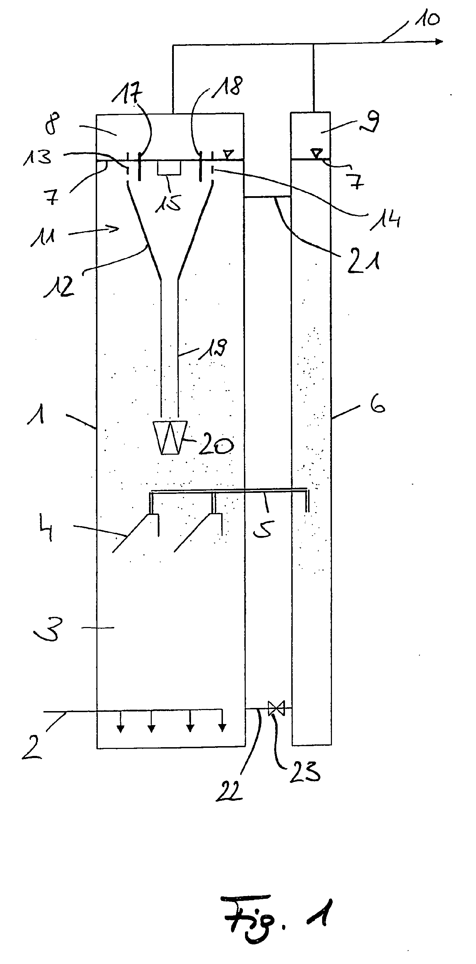

Der Reaktor 1 gemäß Figur 1 umfasst die Einspeisesstellen 2 für das Abwasser. Über die Zuleitung 2 wird das zu reinigende Abwasser im unteren Bereich 3 in den Reaktor 1 eingebracht. Im unteren Bereich 3 des Reaktors 1 ist ein Schlammbett durch Biomasse gebildet. Innerhalb des Schlammbettes im unteren Bereich 3 des Reaktors 1 wird das über die Zuleitung 2 zugeführte Abwasser anaerob gereinigt, wobei organische Verunreinigungen mittels der Biomasse in Biogas umgesetzt werden.

Noch im Bereich 3 des Schlammbettes des Reaktors 1 befindet sich eine Ebene mit Gasabscheiderelementen 4, die das Auffangen des gebildeten Biogases ermöglichen und das Biogas über eine Verbindungsleitung 5 aus dem Reaktor 1 heraus in die Gasaufstiegleitung 6 überleiten.

Gasaufstiegsleitung 6 und Reaktor 1 bilden kommunizierende Röhren und weisen im oberen Bereich denselben Flüssigkeitsstand 7 auf, oberhalb dessen sich der Gassammelraum 8 des Reaktors 1 sowie ein Gassammelraum 9 des Gasaufstiegsrohrs 6 befinden.

Aus den Gassammelräumen 8, 9 ist über eine Leitung 10 das separierte Biogas zur weiteren Verwendung entnehmbar.

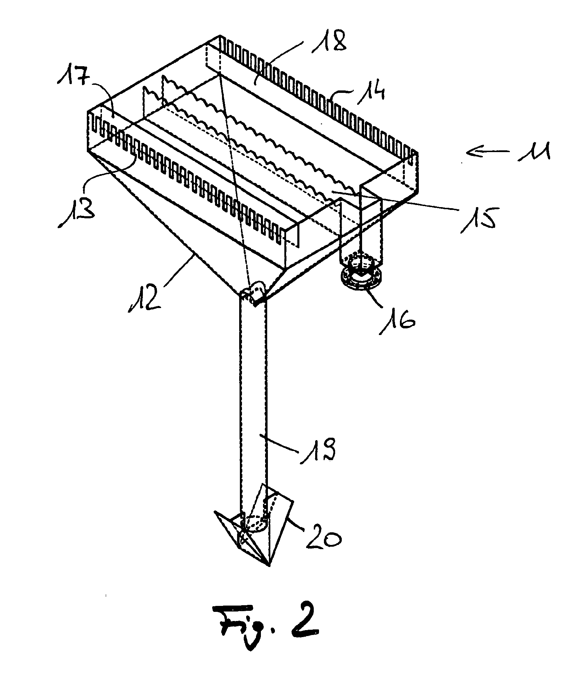

Oberhalb des Schlammbettes im unteren Bereich 3 des Reaktors 1 angeordnet befindet sich die Dreiphasentrennvorrichtung 11, die in Figur 2 in perspektivischer Ansicht dargestellt ist.

Die Dreiphasentrennvorrichtung 11 ist nach unten in den Reaktorraum hinein vollständig geschlossen und in diesem Bereich trichterförmig ausgebildet, d.h. dass im unteren Bereich der Dreiphasentrennvorrichtung 11 der trichterförmige Sedimentsammelbehälter 12 angeordnet ist.

Durch die Umsetzung organischer Verunreinigungen in Biogas mittels der Biomasse lagern sich Gasblasen an Biomassepartikeln an, wodurch ein Auftrieb in senkrechter Richtung innerhalb des Reaktors 1 nach oben entsteht. Durch die Zuleitung des zu reinigenden Abwassers über die Zuleitung 2 im Bereich des Schlammbettes 3 in Reaktor 1 und die Entnahme gereinigten Wassers im oberen Bereich des Reaktors 1 entsteht ebenfalls eine senkrecht nach oben gerichtete Strömung. Hieraus resultiert eine innerhalb des Reaktors 1 senkrecht nach oben gerichtete Strömung eines Dreiphasengemisches aus Gas, Flüssigkeit und Feststoffen.

Das zu trennende Abwasser-, Schlamm-, Gasgemisch strömt über zwei Einströmvorrichtungen 13, 14 in die Dreiphasentrennvorrichtung 11 ein. Die Einströmvorrichtungen 13, 14 die an den beiden gegenüberliegenden Seiten der Dreiphasentrennvorrichtung 11 angeordnet sind, sind gebildet durch vertikal geschlitzte Einlaufkulissen, die somit in horizontaler Richtung durchströmbar sind, dh. dass die aufsteigende Strömung zwangsweise umgelenkt wird von einer vertikalen Richtung in die horizontale Richtung, wodurch bereits ein Teil der Gasblasen abgetrennt wird und in den Gassammelraum 8 des Reaktors 1 aufsteigt. Die Einströmvorrichtungen 13, 14 sind, wie dies in Figur 2 dargestellt ist, mit vertikalen Schlitzen versehen, die eine Gleichverteilung sowie eine Strömungsbeschleunigung bewirken, welche die wirksame Abtrennung der Gasbläschen von den mitgerissenen Schlammpartikeln ermöglicht.

Nach dem Passieren der Einströmvorrichtungen 13, 14 von beiden Seiten in die Dreiphasentrennvorrichtung 11 erfolgt eine Strömungsberuhigung im Sedimentationsraum. In diesem Sedimentationsraum ist zur Unterstützung der Sedimentationswirkung ein Kreuzstromlamellenpaket montiert, dass von dem zu trennenden Abwasserschlammgemisch überwiegend horizontal durchflossen wird. In diesem Lamellenpaket kommen die Schlammpartikel auch bei höheren horizontalen Durchströmungsgeschwindigkeiten weitestgehend zur Sedimentation.

Das gereinigte Abwasser wird über eine Rinne 15 und den an dieser Rinne 15 angeschlossenen Ablauf 16 aus der Dreiphasentrennvorrichtung 11 entnommen. Um eine Kurzschlussströmung des Abwasser-, Schlamm, Gasgemisches von den Einlaufkulissen 13,14 zur Ablaufrinne 15 hin zu vermeiden, sind auf beiden Seiten der symmetrischen Anordnung der Dreiphasentrennvorrichtung 11 Tauchbleche 17, 18 derart angeordnet, dass diese Tauchbleche 17, 18 mit Ihrer Oberkante oberhalb des Wasserspiegels 7 angeordnet sind, so dass das Wasser-, Schlamm-Gemisch zwingend unter dem Tauchblech hindurchströmen muss, um in den Sedimentationsraum bzw. die Ablaufrinne 15 der Dreiphasentrennvorrichtung 11 zu gelangen. Hierdurch wird es zuverlässig verhindert, dass Wasser-, Schlamm-Gemisch ohne vorherige Auftrennung unmittelbar in die Ablaufrinne 15 gelangt.

Der im Sedimentationsraum abgeschiedene Schlamm rutscht in den Schlammtrichter 12, von dem sich eine Leitung 19 aus in den unteren Bereich des Reaktors 1 erstreckt und die dem Abführen der Biomassepartikel in Richtung des Schlammbettes dient. An Ihrem unteren Ende ist die Sedimentableitung 19 mit einem Gasabweiserelement 20 versehen, das ein Eindringen des gebildeten Biogases in die Leitung 19 verhindert. Der Gasabweiser 20 am unteren Ende der Sedimentableitung 19 ist gebildet durch ein V-förmig ausgebildeten Blechwinkel, welcher aufsteigende Gasbläschen an der Leitung 19 vorbei leitet.

Im oberen Bereich der Reaktors 1 werden somit über die Ablaufrinne 15 und die Ableitung 16 gereinigtes Wasser und über die Leitung 10 wird das gebildete Biogas zur weiteren Verwendung entnommen. Der in der Dreiphasentrennvorrichtung 11 abgetrennte Schlamm, bzw. die Sedimentbestandteile werden über den Trichter 12 dem Schlammbett im unteren Bereich 3 des Reaktors 1 wieder zugeführt.

Da die Schlammbestandteile eine größere Dichte als das Wasser bzw. eine größere Dichte als das Wasser-, Schlamm-Gemisch aufweisen, sinken die Schlammbestandteile über den Trichter 12 und die Leitung 19 wiederum zurück in Richtung des Schlammbettes im unteren Bereich 3 des Reaktors 1. Es bilden sich somit in vorteilhafter Weise die gewünschten Strömungen und Transportprozesse einerseits des Gas-, Wasser-, Schlamm-Gemisches nach oben zur Dreiphasentrennvorrichtung 11 aus, als auch aufgrund der auftretenden Dichteunterschiede zwischen Gas, Wasser und Feststoffen, nach dem Trennen des Wasser-Schlamm-Gemisches in der Dreiphasentrennvorrichtung 11, so dass eine Weiterverarbeitung bzw. ein Weitertransport des Biogases über die Leitung 10 sowie des aufbereiteten Wassers über die Ableitung 16 in vorteilhafter Weise möglich ist, ohne dass es einer weitern Energiezufuhr bedarf.

Im oberen Bereich des Reaktors 1 ist eine Ausgleichsleitung 21 zwischen dem Reaktor 1 und dem Gasaufstiegsrohr 6 angeordnet. Im unteren Teil 3 des Reaktors 1 ist zwischen dem Reaktor 1 und dem Gasaufstiegsrohr 6 eine mittels der Absperrarmatur 23 absperrbare und öffenbare Entleerungsleitung 22 angeordnet.

### Bezugszeichenliste

- 1: Reaktor
- 2: Zuleitung
- 3: unterer Reaktorbereich
- 4: Gasabscheiderelement
- 5: Verbindungsleitung
- 6: Gasaufstiegsleitung
- 7: Flüssigkeitsstand
- 8: Gassammelraum
- 9: Gassammelraum
- 10: Leitung (Gasableitung)
- 11: Dreiphasentrennvorrichtung
- 12: Sedimentsammelbehälter
- 13: Einströmvorrichtung
- 14: Einströmvorrichtung
- 15: Ablaufrinne
- 16: Ablauf
- 17: Tauchblech, Tauchwand
- 18: Tauchblech, Tauchwand
- 19: Sedimentableitung
- 20: Gasabweiserelement
- 21: Ausgleichsleitung
- 22: Entleerungsleitung
- 23: Absperrarmatur

## Patentansprüche

1. Reaktor (1) zur anaeroben Behandlung von Flüssigkeiten, insbesondere Abwasser oder wässrigen Lösungen, durch anaerobe biologische Umsetzung organischer Bestandteile und/oder Verunreinigungen mittels granulierter und/oder flockiger und/oder auf fluidisierbaren Trägermaterialien fixierter Biomasse, wobei der Reaktor (1) eine Dreiphasentrennvorrichtung (11) zur Separierung von Gas, Flüssigkeit und Feststoff eines Dreiphasengemisches aufweist,
wobei die Dreiphasentrennvorrichtung (11)
- zumindest eine Einlaufkulisse (13, 14), die horizontal durchströmbar ist, wobei die Einlaufkulisse(n) (13, 14) durch geschlitzte oder gelochte Bleche oder Platten gebildet ist/sind;
- zumindest eine Ablaufvorrichtung (15), über die die Flüssigkeit aus dem Dreiphasengemisch ableitbar ist;
- zumindest eine Umlenkvorrichtung (17, 18), die in dem Strömungsweg zwischen der Einlaufkulisse (13, 14) und der Ablaufvorrichtung (15) zumindest eine Strömungsumlenkung erzwingt, wobei die Umlenkvorrichtung (17, 18) durch zumindest eine über die Wasseroberfläche (7) des Reaktors (1) reichende, insbesondere senkrecht angeordnete Tauchwand (17, 18) ausgebildet ist, wobei die mindestens eine Tauchwand (17, 18) in der Dreiphasentrennvorrichtung (11) zwischen Einlaufkulisse (13, 14) und Ablaufvorrichtung (15) angeordnet ist; und
- eine nach unten gerichtete Sedimentableitung (19), die an ihrer Unterseite Gasabweiser (20) hat,
aufweist.

2. Reaktor (1) nach Anspruch 1, **dadurch gekennzeichnet, dass** die Dreiphasentrennvorrichtung (11) einen sich nach unten verjüngenden, insbesondere trichterförmigen, Sedimentsammelbehälter (12) aufweist.

3. Reaktor (1) nach Anspruch 1 oder 2, **dadurch gekennzeichnet, dass** sich die Sedimentableitung (19) im unteren Bereich an einen Sedimentsammelbehälter (12) der Dreiphasentrennvorrichtung (11) anschließt.

4. Reaktor (1) nach einem der vorherigen Ansprüche, **dadurch gekennzeichnet, dass** die Dreiphasentrennvorrichtung (11) durch miteinander verbundene, insbesondere verschweißte, flache Bleche oder Platten gebildet ist, und insbesondere einen spiegelsymmetrischen Aufbau aufweist.

5. Reaktor (1) nach einem der vorherigen Ansprüche, **dadurch gekennzeichnet, dass** die Ablaufvorrichtung (15) mittig in der Dreiphasentrennvorrichtung (11) angeordnet ist.

6. Reaktor (1) nach einem der vorherigen Ansprüche, **dadurch gekennzeichnet, dass** unterhalb der Dreiphasentrennvorrichtung (11) ein oder mehrere Gasabscheider (4) angeordnet ist/sind, insbesondere im Bereich von 20 % bis 65 % der Reaktorbauhöhe angeordnet ist/sind.

7. Reaktor (1) nach einem der vorherigen Ansprüche, **dadurch gekennzeichnet, dass** unterhalb der Dreiphasentrennvorrichtung (11) ein oder mehrere Gasabscheider (4) angeordnet sind, die ein nach unten offenes Profil zur Gasabscheidung aufweisen, insbesondere ein nach unten offenes Profil mit gewellten oder profilierten Kanten.

8. Reaktor (1) nach einem der vorherigen Ansprüche, **dadurch gekennzeichnet, dass** zumindest ein mit einem unterhalb der Dreiphasentrennvorrichtung (11) angeordneten Gasabscheider (4) in Verbindung stehendes Gasaufstiegsrohr (6) zu dem Reaktor (1) parallel geschaltet ist, wobei der Reaktor (1) und das Gasaufstiegsrohr (6) kommunizierende Röhren bilden.

9. Reaktor (1) nach einem der vorherigen Ansprüche, **dadurch gekennzeichnet, dass** eine Verbindung zwischen Gasabscheidern (4) über eine Verbindungsleitung (5) erfolgt, in der sich ein Gaspolster ausbilden kann.

10. Reaktor (1) nach einem der vorherigen Ansprüche, **dadurch gekennzeichnet, dass** im unteren Teil (3) des Reaktors (1) eine absperrbare Entleerungsleitung (22) angeordnet ist, insbesondere zur Verbindung des Reaktors (1) mit einem Gasaufstiegsrohr (6).

## Claims

1. Reactor (1) for the anaerobic treatment of liquids, in particular wastewater or aqueous solutions, by means of anaerobic, biologic conversion of organic components and/or contaminations by means of a granulated and/or flaked biomass, and/or one that is fixed on fluidized carrier materials, wherein the reactor (1) has a three-phase separating device (11) for separating gas, liquids and solids of a three-phase mixture,
wherein the three-phase separating device (11) has
- at least one inlet slotted piece (13, 14) that can be flowed through horizontally, wherein the inlet slotted piece(s) (13, 14) is/are formed by slotted or perforated metal sheets or plates;
- at least one discharge device (15), via which the liquid may be discharged from the three-phase mixture;
- at least one deflection device (17, 18) enforcing at least one flow deflection in the flow path between the inlet slotted piece (13, 14) and the discharge device (15), wherein the direction of the deflection (17, 18) is embodied by means of at least one downflow baffle (17, 18) spanning across the water surface (7) of the reactor (1), in particular being disposed perpendicularly, wherein the at least one downflow baffle (17, 18) is disposed in the three-phase separating device (11) between the inlet slotted piece (13, 14) and the discharge device (15); and
- a sediment discharge (19) directed downward, having a gas deflector (20).

2. Reactor (1) according to claim 1, **characterized in that** the three-phase separating device (11) has a sediment collection container (12) that is tapered toward the bottom, and in particular is funnel-shaped.

3. Reactor (1) according to claims 1 or 2, **characterized in that** the sediment discharge (19) is connected to a sediment collection container (12) of the three-phase separating device (11) in the lower region thereof.

4. Reactor (1) according to one of the previous claims, **characterized in that** the three-phase separating device (11) is formed by means of flat metal sheets of plates being connected to each other, in particularly welded to each other, and in particular having a mirror-symmetrical design.

5. Reactor (1) according to one of the previous claims, **characterized in that** the discharge device (15) is disposed in the center of the three-phase separating device (11).

6. Reactor (1) according to one of the previous claims, **characterized in that** one or more gas separator(s) (4) is/are disposed below the three-phase separating device (11), in particular in the region of 20 % to 65 % of the reactor's overall height.

7. Reactor (1) according to one of the previous claims, **characterized in that** one or more gas separators (4) are disposed below the three-phase separating device (11), having a profile that is open toward the bottom for gas separation, in particular a profile that is open toward the bottom, with undulated or profiled edges.

8. Reactor (1) according to one of the previous claims, **characterized in that** at least one gas riser (6) being connected to a gas separator (4) disposed below the three-phase separating device (11) is connected to the reactor (1) in parallel, wherein the reactor (1) and the gas riser (6) form communicating tubes.

9. Reactor (1) according to one of the previous claims, **characterized in that** a connection is carried out between the gas separators (4) via a connection line (5), in which a gas cushion may be formed.

10. Reactor (1) according to one of the previous claims, **characterized in that** a lockable exhaust line (22) is disposed in the lower part (3) of the reactor (1), in particular for connecting the reactor (1) to a gas riser (6).

## Revendications

1. Réacteur (1) pour le traitement anaérobie de liquides, en particulier d'eaux usées ou de solutions aqueuses, par conversion biologique anaérobie d'impuretés et/ou de constituants organiques à l'aide d'une biomasse granulée et/ou floculée et/ou fixée sur des matériaux de support fluidifiables, le réacteur (1) comportant un dispositif de séparation à trois phases (11) destiné à séparer le gaz, le liquide et la matière solide d'un mélange à trois phases,
sachant que le dispositif de séparation à trois phases (11) présente
- au moins une coulisse d'entrée (13, 14) qui peut être traversée horizontalement par le flux, sachant que la ou les coulisses d'entrée (13, 14) sont formées par des tôles fendues ou perforées ;
- au moins un dispositif de sortie (15), par lequel le liquide peut être évacué du mélange à trois phases ;
- au moins un dispositif de déviation (17, 18), qui provoque au moins une déviation forcée de l'écoulement sur le parcours entre la coulisse d'entrée (13, 14) et le dispositif de sortie (15), sachant que le dispositif de déviation (17, 18) est formé par au moins une paroi plongeuse (17, 18), disposée notamment verticalement et s'étendant au-dessus de la surface (7) de l'eau du réacteur (1), sachant que la paroi plongeuse au moins unique (17, 18) est disposée dans le dispositif de séparation à trois phases (11) entre la coulisse d'entrée (13, 14) et le dispositif de sortie (15) ; et
- une conduite d'évacuation de sédiment (19) dirigée vers le bas, qui possède un déflecteur de gaz (20) sur son côté inférieur.

2. Réacteur (1) selon la revendication 1, **caractérisé en ce que** le dispositif de séparation à trois phases (11) présente un récipient collecteur de sédiment (12) se rétrécissant vers le bas, notamment en forme d'entonnoir.

3. Réacteur (1) selon la revendication 1 ou 2, **caractérisé en ce que** la conduite d'évacuation de sédiment (19) se raccorde dans la région inférieure à un récipient collecteur de sédiment (12) du dispositif de séparation à trois phases (11).

4. Réacteur (1) selon l'une des revendications précédentes, **caractérisé en ce que** le dispositif de séparation à trois phases (11) est formé par des plaques ou tôles plates assemblées entre elles, notamment par soudage, et présente notamment une structure symétrique.

5. Réacteur (1) selon l'une des revendications précédentes, **caractérisé en ce que** le dispositif de sortie (15) est disposé au milieu dans le dispositif de séparation à trois phases (11).

6. Réacteur (1) selon l'une des revendications précédentes, **caractérisé en ce qu'**un ou plusieurs séparateurs de gaz (4) sont disposés en dessous du dispositif de séparation à trois phases (11), notamment sont disposés dans la région située entre 20% et 65% de la hauteur du réacteur.

7. Réacteur (1) selon l'une des revendications précédentes, **caractérisé en ce que** qu'un ou plusieurs séparateurs de gaz (4) sont disposés en dessous du dispositif de séparation à trois phases (11) et présentent un profil ouvert vers le bas pour la séparation de gaz, notamment un profil ouvert vers le bas avec des bords ondulés ou profilés.

8. Réacteur (1) selon l'une des revendications précédentes, **caractérisé en ce qu'**au moins un tube de montée de gaz (6) relié à un séparateur de gaz (4) disposé en dessous du dispositif de séparation à trois phases (11) est monté en parallèle avec le réacteur (1), le réacteur (1) et le tube de montée de gaz (6) formant des vases communicants.

9. Réacteur (1) selon l'une des revendications précédentes, **caractérisé en ce qu'**une communication entre des séparateurs de gaz (4) s'effectue au moyen d'une conduite de liaison (5) dans laquelle peut se former un coussin de gaz.

10. Réacteur (1) selon l'une des revendications précédentes, **caractérisé en ce qu'**une conduite de vidage (22) pouvant être fermée est disposée dans la partie inférieure (3) du réacteur (1), en particulier afin de relier le réacteur (1) à un tube de montée de gaz (6).
